# EUROPEAN PATENT APPLICATION

(11) **EP 2 051 189 A1**
(43) Date of publication of application: **22.04.2009**
(21) Application number: 07020380.7
(22) Date of filing: 18.10.2007
(51) Int. Cl.: G06K 19/07

(54) **Device for electronic identification of items**

(71) Applicant: SIEMENS AKTIENGESELLSCHAFT, 80333 München (DE)
(72) Inventor: Fontanot, Paolo, 34074 Mofalcone (IT)
(74) Representative: Kley, Hansjörg

(57) **Abstract**

A device (1) for electronic identification of items is presented, comprising a signal receiver circuit (2) and a visual signalling unit (3) that, based on a received signal, indicates a transport status of an item to which the device (1) for electronic identification of items is attachable. By means of this device, the present invention provides a way for enhancing the identification, tracking and transportation of items for logistical purposes.

## Description

Material handling of items can be a major issue in factories where for example discrete-manufacturing or logistical processes take place. Most techniques adopted to maximize industrial profit are focused on production efficiency and throughput. These require a good material handling to ensure smooth material flow through production cells and assembly lines together with a reduction of a work-in-process inventory. This goal can be achieved by specializing the way the plant is organized adopting a "product layout" (like in a car assembly line wherein the items are all parts of the car to be assembled), where the productive resources are sequentially arranged to follow the routing for a specific product. This kind of layout however lacks in flexibility because the product changes needed to follow market's demands require costly and time-consuming layout modifications. More flexibility can be achieved using a "process layout" or "functional layout, in which operations with similar nature or function are grouped together and materials are moved between the production units accordingly to the specific product routing. In this case the goal of optimizing production performances can be pursued by adopting just-in-time (also named JIT) production techniques to ensure that "the right materials are in the right place at the right time". Material handling plays a major role in achieving this goal. However material handling becomes cumbersome in case of complex products or other items with many different product codes and part numbers. Radio frequency identification (RFID) is a term that is used to describe a system that transmits the identity - in the form of a unique serial number - of an object wirelessly, using radio waves. The use of RFID techniques can greatly help in identifying materials or items on a shop floor but usually when their storing is going wrong or in case the materials or items are moved from a work station or production cell to a wrong destination, a material identification is only done after the parts have already arrived in the wrong place.

The goal of the invention is to provide a way for enhancing the identification, tracking and transportation of items for logistical purposes.

A solution by means of a device for electronic identification of items according to claim 1 is proposed. An advantageous system for tracking and transportation of an item as well as possible uses of said device according to claims 21, 25 and 26 are also presented in relation to the invention.

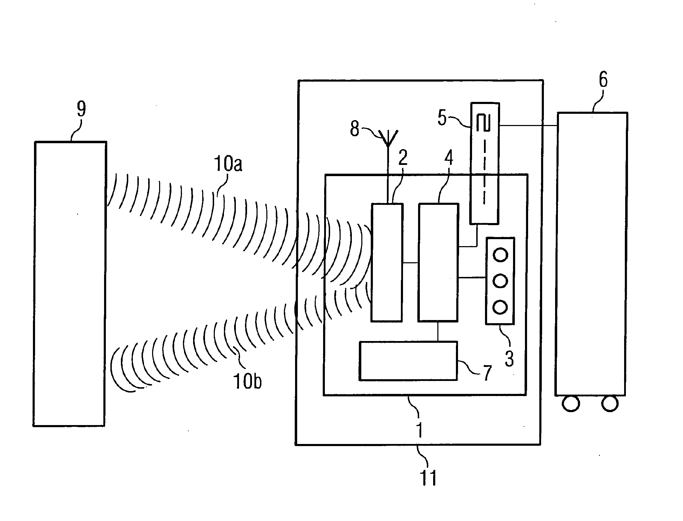

The device is further explained by the following description and drawing 1, whereby:

Drawing 1 shows an example of a system comprising the device for electronic identification of items.

Drawing 1 shows a system comprising an optional automated transport machine 6 that can handle the position of at least one of movable items 11 like for example a box or any else merchandise that must follows logistical transport requirements in a production line or in a storage area for products. In order to permit an identification of one of such movable items 11, a device 1 like an electronic ID-tag is attached to the item (and hence displaced with the item), whereby said device 1 provides a communication path with an external ID-tag-reader comprising a transmitting source 9 and a receiving element for getting identification data of the movable item 11.

The transmitting source 9 transmits a wave 10a to the device 1 for electronic identification of the movable item 11. The signal receiver circuit 2 receives the wave by means of an antenna 8, demodulates it and passes the resulting signal to a microchip 4. The microchip 4 is connected to a visual signalling unit 3 and with signalling digital output 5. By means of the signalling digital output, the microchip transmits data to a transportation system 6 if an automated logistical unit performs the transport otherwise data are transmitted optically/visually to an operator that can manually act on the logistic. The microchip stores the needed data in a non-volatile memory 7. The non-volatile memory can also contain identification data or serial numbers of movable item 11. This data can be modulated into a reflected wave the signal receiver circuit 2 reflects to the transmitting source 9.

The invention relates to a device 1 for electronic identification of items, comprising a signal receiver circuit 2 and a signalling unit (preferably visual) that, based on a received signal at the signal receiver circuit 2, indicates a transport status of an item to which the device 1 for electronic identification of items is attachable. The proposed solution advantageously enables the implementation of Just-In-Time handling of items making it possible not only to track movements of the item but also to steer them, thus avoiding potential queues and production bottlenecks. Over the signalling device comprising a visual signalling unit 3 it is possible to provide a (optical) digital output of logistical information data that are interpretable by a human operator or any other else "viewing" machine interface. It is also possible to realize the signalling device with some digital signalling output transmission means that enable a communication between the item and an automated machine.

For clarity purposes, the device for electronic identification of items 1 will be referred to in the following description as device.

The term "item" refers to any movable material or product, for example merchandise stored or/and moved in a manufacturing site that has to be dealt with from a logistical point of view.

In a preferred embodiment, a microchip 4 is connected to the signal receiver circuit 2 and comprises means for adapting a received signal in order to provide information readable by one or more further connected devices. This advantageously allows the adaptation of the device to numerous customisable applications and makes it possible to connect the device to numerous devices used in an automation process.

In a preferred embodiment, the microchip 4 is connected to the visual signalling unit 3 and has means for transmitting transport status indication commands to the visual signalling unit 3. The advantage is that the microchip 4 can be programmed to suit any requirements in order to control different types of visual signalling units.

In a preferred embodiment, the microchip 4 is connected to and has means for transmitting transportation commands via a signalling digital output 5 to a transportation system 6. This advantageously makes the device more flexible to requirements of system automation and expands the possibilities of use of the device.

In a preferred embodiment, the signal receiver circuit 2 comprises a non-volatile memory unit 7 used to store the product identification data and the transportation and transport status indication commands. The advantage is that all data needed by the microchip 4 as well as information about the item the device is attached on is stored in a way that the said data and information is available at all times and does not need to be reloaded every time the device is used.

In a preferred embodiment, the visual signalling unit 3 comprises colour-coded means or other variable visual patterns indicating whether the transport of the product is to be stopped or continued. This advantageously makes it easier for logistics personnel to determine the status of an item to be transported.

In a preferred embodiment, the visual signalling unit 3 additionally comprises colour-coded means or other variable visual patterns indicating whether the product is to be placed in a production holding pattern. The advantage is that logistics personnel or a machine easily determines if an item is ready to be processed by further means.

In a preferred embodiment, the visual signalling unit 3 comprises optical emitting means, ideally control lamps or/and optoelectronic devices, each separately emitting light of a different colour. The advantage is that numerous different states of an item in terms of transportation, sorting or further processing can be signalised.

In another preferred embodiment, the visual signalling unit 3 comprises an electronic paper (e-paper) device. One important advantage of the said electronic paper device is that the image can be maintained without a constant supply of power. The electronic paper device can provide and display logistic information related to transport status of the movable item 11 both in a human-readable and in a machine readable format (barcode or other), thus enabling the usage of existing barcode readers widely employed for logistic purposes.

In a preferred embodiment, the visual signalling unit 3 provides the variable visual pattern in form of barcode or 2D image code that can be read by standard optical scanners. This advantageously increases the efficiency of the item handling insofar that widely spread standard machines can be used to interpret the barcode or 2D image code in order to automate the process of item displacement, sorting or storage.

In a preferred embodiment, the signal receiver circuit 2 comprises at least one antenna 8. Furthermore the signal receiver circuit 2 can be adapted to receiving radio frequency signals. This advantageously enables the device to receive signals and commands from a remote device wirelessly.

In a preferred embodiment, the signal receiver circuit 2 is powered by a battery. This advantageously makes the device independent of outer power sources.

In a preferred embodiment, the signal receiver circuit 2 is powered by a current induced by an electromagnetic wave 10a provided by a transmitting source 9 which is located in reception range of the signal receiver circuit 2. Another way the power delivering for the device can be achieved is advantageously by rendering the device passive in a way that the power is provided externally and wirelessly.

In a preferred embodiment, the visual signalling unit 3 is powered by the current induced by the electromagnetic wave 10a provided by the transmitting source 9 which is located in reception range of the signal receiver circuit 2. This advantageously renders the said signalling unit independent of local power furnishing, for example by getting the power from the signal receiver circuit 2.

In a preferred embodiment, the signal receiver circuit 2 has means to demodulate a modulated signal comprised in the electromagnetic wave 10a provided by the transmitting source (9) and interpret a thereby demodulated signal. The advantage is that any commands or information can be wirelessly sent to the device, the latter having the capability to interpret the commands or information.

In a preferred embodiment, the signal receiver circuit 2 has means to reflect to the transmitting source 9 an electromagnetic wave 10b. The advantage is that the device does not need an explicit sender unit, thereby simplifying the circuits of the device.

In a preferred embodiment, the signal receiver circuit 2 has means to modulate stored information into the reflected electromagnetic wave 10b. The advantage is that the device is able to add information which it stores to the said electromagnetic wave 10b, thereby enabling a remote system to read the said information, for example identification or serial numbers, transport destination data, information on the product (inflammable, fragile, etc.), etc.

In a preferred embodiment, the transmitting source 9 and the signal receiver circuit 2 use a proprietary protocol for exchange of data. This advantageously enables the device to be used by different wireless communication systems. A further advantage is that for example security sensitive data can be wirelessly transmitted using a transmission protocol only known to the authorised system for i.e. logistics.

In another preferred environment the transmitting source (9) and the signal receiver circuit (2) use a standard RFID protocol for exchange of data. This advantageously allows the use of existing devices 1 for electronic identification of items which support uniquely the standard RFID protocol, thus rendering the present invention compatible to state of the art solutions.

In a further preferred embodiment of the invention, a system for tracking and transportation of an item is proposed, comprising the device 1 for electronic identification of items and an electronic product tracker, wherein the electronic product tracker comprises means for receiving and interpreting commands from the product identification device (1) via a signalling output in order to locate the position of the device. This advantageously provides a higher range of flexibility in handling the device by enabling the system to automatically read out needed information from the device, for example destination of storage of product handling information.

This system can comprise an electronically controlled product transporter, wherein the electronically controlled product transporter comprises means for receiving and interpreting commands from the product identification device (1) via the signalling output in order to move and sort products and materials. This advantageously automates a logistic path for an item to be transported and avoids time wasting as well as the intervention of personnel.

The signalling output mentioned above can be a signalling digital output 5 or/and a visual signalling unit 3. This makes the system easily and flexibly adaptable to interfaces and signal input devices connected to further machines involved in the transportation or tracking of items.

The invention presents advantageously a possible use of the device for controlling a location based logistic of movable items in an area, providing an improvement of the all in all efficiency of the logistics system by for example making it easy to analyse bottlenecks or dealing with high load times. Furthermore it is possible to centralise all information from numerous items in order to have an improved overview about all involved logistical processes.
Another advantage is the use of the device for triggering at least one displacement machine, for example if the item and its device are entering an action area of the said machine. Instead of triggering a machine, said device can also be used for indicating (over the visual signalling unit 3) to human operators if or/and which one of a plurality of items has to be carried from a place to another place. For example, if said visual signalling unit 3 switches a green light, the item can be moved from its present place to another one. If the visual signalling unit 3 switches a red light, the item has to stay at its present place. If the visual signalling unit 3 switches a yellow light, the item is at wrong place and the location of item has to be manually controlled. The visual signalling unit 3 can also contain more visual signalling codes that deliver finer information on the way of achieving a logistical process.

### List of abbreviations

- 1: = device for electronic identification of items
- 2: = signal receiver circuit
- 3: = visual signalling unit
- 4: = microchip
- 5: = signalling digital output
- 6: = transportation system
- 7: = non-volatile memory
- 8: = dipole antenna
- 9: = transmitting source
- 10a: = wave from transmitting source
- 10b: = reflected wave
- 11: = movable item (box, pallet or other merchandising unit) to which the device 1 is attached

## Claims

1. Device (1) for electronic identification of items, comprising a signal receiver circuit (2) and a visual signalling unit (3) that, based on a received signal, indicates a transport status of a movable item (11) to which the device (1) for electronic identification of items is attachable.

2. Device (1) for electronic identification of items according to claim 1, whereby a microchip (4) is connected to the signal receiver circuit (2) and comprises means for adapting a received signal in order to provide information readable by one or more further connected devices.

3. Device (1) for electronic identification of items according to claim 2, whereby the microchip (4) is connected to the visual signalling unit (3) and has means for transmitting transport status indication commands to the visual signalling unit (3).

4. Device (1) for electronic identification of items according to claim 2, whereby the microchip (4) is connected to and has means for transmitting transportation commands via a signalling digital output (5) to a transportation system (6).

5. Device (1) for electronic identification of items according to claims 3 and 4, wherein the signal receiver circuit (2) comprises a non-volatile memory unit (7) used to store product identification data and the transportation and transport status indication commands.

6. Device (1) for electronic identification of items according to one of the preceding claims, wherein the visual signalling unit (3) comprises colour-coded means or other variable visual patterns indicating whether the transport of the product is to be stopped or continued.

7. Device (1) for electronic identification of items according to one of the preceding claims, wherein the visual signalling unit (3) additionally comprises colour-coded means or other variable visual patterns indicating whether the product is to be placed in a production holding pattern.

8. Device (1) for electronic identification of items according to claims 6 or 7, wherein the visual signalling unit (3) comprises optical emitting means, ideally control lamps or/and optoelectronic devices, each separately emitting light of a different colour.

9. Device (1) for electronic identification of items according to claims 6 or 7, wherein the visual signalling unit (3) comprises an electronic paper (e-paper) device.

10. Device (1) for electronic identification of items according to claims 6 or 7, wherein the visual signalling unit (3) provides the variable visual pattern in form of barcode or 2D image code that can be read by standard optical scanners.

11. Device (1) for electronic identification of items according to one the preceding claims, wherein the signal receiver circuit (2) comprises at least one antenna (8).

12. Device (1) for electronic identification of items according to one of the preceding claims, wherein the signal receiver circuit (2) is adapted to receiving radio frequency signals.

13. Device (1) for electronic identification of items according to one of the preceding claims, wherein the signal receiver circuit (2) is powered by a battery.

14. Device (1) for electronic identification of items according to one of the preceding claims 1 to 12, wherein the signal receiver circuit (2) is powered by a current induced by an electromagnetic wave (10a) provided by a transmitting source (9) which is located in reception range of the signal receiver circuit (2).

15. Device (1) for electronic identification of items according to claim 14, wherein the visual signalling unit (3) is powered by the current induced by the electromagnetic wave (10a) provided by the transmitting source (9) which is located in reception range of the signal receiver circuit (2).

16. Device (1) for electronic identification of items according to claim 14, whereby the signal receiver circuit (2) has means to demodulate a modulated signal comprised in the electromagnetic wave (10a) provided by the transmitting source (9) and interpret a thereby demodulated signal.

17. Device (1) for electronic identification of items according to claims 14 or 16, whereby the signal receiver circuit (2) has means to reflect to the transmitting source (9) an electromagnetic wave (10b).

18. Device (1) for electronic identification of items according to claim 17, whereby the signal receiver circuit (2) has means to modulate stored information into the reflected electromagnetic wave (10b).

19. Device (1) for electronic identification of movable items according to claim 18, whereby the transmitting source (9) and the signal receiver circuit (2) use a proprietary protocol for exchange of data.

20. Device (1) for electronic identification of items according to claim 18, whereby the transmitting source (9) and the signal receiver circuit (2) use a standard RFID protocol for exchange of data.

21. System for tracking and transportation of an item, comprising a device (1) for electronic identification of items according to one of the preceding claims and an electronic product tracker, wherein the electronic product tracker comprises means for receiving and interpreting commands from the product identification device (1) via a signalling output in order to locate the position of the device (1) for electronic identification of items.

22. System according to claim 21, further comprising an electronically controlled product transporter, wherein the electronically controlled product transporter comprises means for receiving and interpreting commands from the device (1) for electronic identification of items via the signalling output in order to move and sort products and materials.

23. System according to claim 21 or 22, wherein signalling output is a signalling digital output (5).

24. System according to claim 21 or 22, wherein signalling output is a visual signalling unit (3).

25. Use of device according to preceding claims for controlling a location based logistic of movable items in an area.

26. Use of device for triggering at least one displacement machine.
